# EUROPEAN PATENT SPECIFICATION

(11) **EP 4 164 001 B1**
(45) Date of publication and mention of the grant of the patent: **24.12.2025**
(21) Application number: 21838343.8
(22) Date of filing: 29.06.2021
(51) Int. Cl.: H01M 4/04, H01M 4/38, H01M 10/052, H01M 10/44, H01M 4/02, H01M 4/48

(54) **LITHIUM ION BATTERY POSITIVE ELECTRODE ACTIVE MATERIAL AND PREPARATION METHOD THEREFOR**
POSITIVELEKTRODENAKTIVMATERIAL FÜR LITHIUM-IONEN-BATTERIE UND HERSTELLUNGSVERFAHREN DAFÜR
MATÉRIAU ACTIF D'ÉLECTRODE POSITIVE DE BATTERIE AU LITHIUM-ION ET SON PROCÉDÉ DE PRÉPARATION

(30) Priority: 07.07.2020 CN 202010644842
(43) Date of publication of application: 12.04.2023
(73) Proprietor: BASF Shanshan Battery Materials Co., Ltd., Changsha, Hunan 410205 (CN)
(72) Inventor: TANG, Bo, Changsha, Hunan 410205 (CN); NING, Piao, Changsha, Hunan 410205 (CN); HAN, Guishi, Changsha, Hunan 410205 (CN)
(74) Representative: Chung, Hoi Kan
(86) International application number: PCT/CN2021/103025
(87) International publication number: WO 2022/007663

(56) References cited:
- WO-A1-2019/021806
- CN-A- 108 417 791
- CN-A- 110 474 026
- CN-A- 111 193 018
- CN-A- 111 193 018
- JP-A- 2002 015 739
- JP-A- 2003 020 229
- JP-A- 2004 281 255
- JP-A- 2004 281 255
- JP-A- 2006 172 753
- JP-A- 2006 172 753
- JP-A- 2010 080 394
- US-A1- 2004 229 123
- US-A1- 2015 243 970
- US-A1- 2019 173 084
- ZHONG S W ET AL: "Characteristics and electrochemical performance of cathode material Co-coated LiNiO2 for Li-ion batteries", TRANSACTIONS OF NONFERROUS METALS SOCIETY OF CHINA, ELSEVIER, AMSTERDAM, NL, vol. 16, no. 1, 1 February 2006 (2006-02-01), pages 137 - 141, XP022935363, ISSN: 1003-6326, [retrieved on 20060201], DOI: 10.1016/S1003-6326(06)60024-1

## Description

### TECHNICAL FIELD

The present disclosure belongs to the field of cathode materials for lithium-ion batteries (LIBs), and in particular relates to a cathode active material for an LIB and a preparation method thereof.

### BACKGROUND

Lithium metallic compounds, especially nickel-based layered lithium metallic oxides, are cathode active materials commonly used in LIBs. During a charge-discharge process of a lithium battery, a cathode active material will undergo various side reactions with an electrolyte, which accelerates the structural damage of the cathode material. In order to improve the structural stability of a cathode material and alleviate the side reactions between the cathode material and an electrolyte, the cathode material is commonly doped or coated with a metal oxide, a metal fluoride, or a metal phosphate for modification, which is mainly intended to enhance the structural stability of a layered material or hinder the direct contact between an active material and an electrolyte, thereby avoiding the occurrence of side reactions.

Although the above technical means can improve the performance of a cathode material to some extent, it is still difficult to meet the requirements of advanced performance of lithium batteries. In addition to the substances mentioned above, the introduction of a sulfate into a lithium metallic compound can improve the performance of a cathode material to some extent. For example, the patent US7645542B2 discloses a sulfate ion-containing cathode active material, where a sulfate is allowed to react with residual lithium (lithium carbonate and lithium hydroxide) to produce lithium sulfate, and the consumption of the residual lithium makes a capacity of the active material improved. However, this technology requires a sulfate ion content to be no less than 0.4%, otherwise the sulfate cannot completely remove the residual lithium and thus cannot increase the initial capacity. In addition, the added sulfate cannot be lithium sulfate because lithium sulfate cannot react with residual lithium to achieve the purpose of improving performance. The patent CN109742347A discloses a high-nickel cathode material with a composite coating layer, where a lithium metallic layered structure and lithium phosphate or lithium sulfate are used to prepare the composite coating layer, and the lithium sulfate coating can serve as a fast ion conductor to improve the rate performance. The prior art JP2006172753A discloses a lithium-nickel manganese composite for a lithium secondary battery positive electrode material to provide a low-cost lithium-nickel-manganese-based composite oxide reducing a cost and of compatibly establishing enhancement of safety and battery performance improvement when it is used as a lithium secondary battery positive electrode material. The prior art US2015/243970A1 discloses a positive active material, a method of preparing the positive active material, a positive electrode including the positive active material, and a lithium battery including the positive active material. The positive active material includes a core and a coating layer on the core. The coating layer includes a sulfur component. When a binding energy peak of the sulfur is measured by X-ray photoelectron spectroscopy (XPS), the binding energy peak is observed at about 165 eV to about 168 eV, and the stability of the positive active material may be improved due to the coating layer. Accordingly, the lifespan properties of a lithium battery including the positive active material may be improved. The prior art US2004/229123A1 discloses a positive electrode active material for a nonaqueous electrolyte secondary battery having at least a lithium-transition metal composite oxide of a layer structure, in which an existence ratio of at least one selected from the group consisting of elements which may become tetravalent and magnesium is 20% or more on a surface of the lithium-transition metal composite oxide. By use of this positive electrode active material, a nonaqueous electrolyte secondary battery having excellent battery characteristics, specifically, having excellent high rate characteristics, cycle characteristics, low-temperature characteristics, thermal stability, and the like, under the even more harsh environment for use can be realized. The prior art JP2010080394A discloses a positive electrode active material for a non-aqueous electrolyte secondary battery comprising secondary particles formed by agglomeration of hexagonal lithium nickel composite oxide primary particles having a layered structure with an average particle size of 0.1 to 2 µm. The composition of the primary particles of the lithium nickel composite oxide is represented by the following chemical formula 1, and the surface of the primary particles has a coating layer of an inorganic lithium compound, and the area ratio occupied by the coating layer is secondary particle breakage. A positive electrode active material characterized by being 2.5 to 9% of the area. However, a phosphate or sulfate needs to be precipitated in a liquid phase and also needs to be rinsed with an organic solvent, resulting in a complicated process and a high production cost.

### SUMMARY

The invention is defined by the appended claims.

The technical problem to be solved by the present disclosure: A cathode active material for an LIB and a preparation method thereof are provided to overcome the deficiencies and shortcomings mentioned in the above background art.

In order to solve the above technical problem, the present disclosure provides the following technical solutions.

The present disclosure discloses a cathode active material for an LIB, including a matrix of the cathode active material and a sulfur-containing compound, where a mass of S in the sulfur-containing compound is 0.06% to 0.40% of a total mass of the cathode active material for the LIB; and the sulfur-containing compound exists in the form of a sulfate.

S exists in the form of a sulfate in the cathode active material, and the sulfate has high electron affinity and thus can bind to a transition metal of the cathode active material to stabilize the surface and interface. During a charge-discharge process of a lithium battery, a sulfate in the cathode active material will react with an electrolyte to produce an alkyl sulfonate structure, and this functional group structure can enhance the interfacial stability between the cathode active material and the electrolyte and hinder the destruction of the electrolyte to a surface of the cathode material, and can also serve as a protective film for the cathode active material to extend a cycling life of a lithium battery. If an S content is too low, it will be difficult to produce enough alkyl sulfonate functional groups, and thus the effect of enhancing the interfacial stability between the cathode active material and an electrolyte cannot be achieved; and if an S content is too high, a too-thick protective film will be formed, which will hinder the transport of lithium ions and reduce a capacity of a battery.

It is verified by the applicants of the present disclosure through exploratory research and repeated experiments that, when an S content reaches 0.06%, enough alkyl sulfonate functional groups can be produced to significantly improve the interfacial stability between the cathode active material and an electrolyte; and when an S content does not exceed 0.13%, a thickness of a formed protective film is relatively small for hindering the transport of lithium ions, resulting in unremarkable reduction of battery capacity. However, when an S content exceeds 0.13%, although a thickness of a formed alkyl sulfonate protective layer will increase with the increase of the S content, the cycling performance cannot be improved significantly, the deintercalation of lithium ions will be seriously hindered, and the capacity reduction will be accelerated. Thus, in order to make both the cycling performance and the capacity excellent, the mass of S in the sulfur-containing compound is preferably 0.06% to 0.13% of a total mass of the cathode active material for the LIB.

In the cathode active material for the LIB, preferably, the sulfur-containing compound includes one or more selected from the group consisting of lithium sulfate, cobalt sulfate, manganese sulfate, aluminum sulfate, magnesium sulfate, titanium sulfate, zirconium sulfate, sodium sulfate, sodium metabisulfite, and ammonium sulfate. Different types of sulfates have different effects on the lithium metallic compound. Although the introduction of any sulfate will enhance the stability of the cathode active material in an electrolyte, the additional introduction of different metals will have different additional effects on the lithium metallic compound. For example, when cobalt sulfate and manganese sulfate are added, the introduction of Co and Mn will enhance the structural stability of the lithium metallic compound; when aluminum sulfate is added, the introduction of Al will enhance the structural stability and thermal stability of the cathode active material, but will reduce the capacity; and when sodium sulfate and sodium metabisulfite are added, Na may replace a Li site to expand a lattice volume, which can reduce the resistance for transport of lithium ions, but will reduce the capacity. The addition of lithium sulfate can greatly improve the cycling performance, initial efficiency, and discharge capacity, where the presence of the sulfate can improve the cycling performance, and the introduction of Li can compensate for the lost Li in a lattice to play a role of a lithium supplement, such that the initial efficiency and discharge capacity are also improved.

In the cathode active material for the LIB, the sulfur-containing compound is mainly coated on a surface of the matrix of the cathode active material.

In the cathode active material for the LIB, the surface of the matrix of the cathode active material is further coated with cobalt hydroxide; and a coating amount of the cobalt hydroxide is calculated based on cobalt, and a mass of the cobalt is 0.1% to 1.5% of the total mass of the cathode active material for the LIB. The coated cobalt hydroxide can react with the residual lithium to produce a lithium cobalt oxide (LCO) structure, and the LCO structure can enhance the surface structural stability and improve the efficiency and rate performance, and can also cooperate with the sulfate substance coated on the surface to enhance the electrochemical performance of the cathode active material.

In the cathode active material for the LIB, in an alternative configuration useful to understand the claimed invention, the sulfur-containing compound is mainly doped in the matrix of the cathode active material.

In the cathode active material for the LIB, preferably, the matrix of the cathode active material has a chemical formula of LiₓNi_{y}M_{(1-y)}O₂, where M is one or more selected from the group consisting of Co, Mn, Al, Mg, Ti, and Zr, 0.95 ≤ x ≤ 1.05, and 0.50 ≤ y ≤ 1.

As a general inventive concept, the present disclosure also provides a preparation method of the cathode active material for the LIB, including the following steps: mixing the matrix of the cathode active material and the sulfur-containing compound according to a stoichiometric ratio, and subjecting a resulting mixture to calcination to obtain the cathode active material for the LIB, where the calcination is conducted at 300°C to 750°C for 3 h to 15 h.

A sulfate can be introduced through coating, that is, a sulfate and the matrix of the cathode active material can be co-sintered. In this case, the sulfate can be evenly distributed on the interface and surface of the cathode active material, which can improve the chemical stability of the cathode active material in an electrolyte and can also improve both the thermal stability and the cycling performance during an electrochemical reaction.

In the preparation method, the cobalt hydroxide is further added during the mixing.

As a general inventive concept, the present disclosure also provides a preparation method of the cathode active material for the LIB, including the following steps: mixing a precursor of the cathode active material, a lithium source, and the sulfur-containing compound according to a stoichiometric ratio, and subjecting a resulting mixture to calcination to obtain the cathode active material for the LIB, where the calcination is conducted at 650°C to 950°C for 6 h to 18 h.

In the preparation method, preferably, the lithium source is one or more selected from the group consisting of lithium hydroxide, lithium carbonate, and lithium sulfate. When the lithium source is lithium sulfate, the lithium source also provides a sulfate.

A sulfate can be introduced through doping, that is, a precursor of the cathode active material, a lithium compound, and a sulfate are co-sintered to produce a sulfate-containing lithium metallic compound. Since the sulfate can compensate for the incomplete binding between a transition metal and oxygen to play a role of stabilizing the surface energy, the morphology and size of a primary particle in the sulfate-doped cathode active material will change, which can improve the capacity and efficiency other than the cycling performance during an electrochemical reaction. In addition, the precursor of the cathode active material itself also includes S, which can also have a doping effect.

Compared with the prior art, the present disclosure has the following advantages:
(1) In the cathode active material for the LIB of the present disclosure, a sulfate is distributed in a lithium metallic compound matrix. During a charge-discharge process of a lithium battery, a sulfate in a cathode active material will react with an electrolyte to produce an alkyl sulfonate structure, and this functional group structure can enhance the interfacial stability between the cathode active material and the electrolyte and hinder the destruction of the electrolyte to a surface of the cathode material, and can also serve as a protective film for the cathode active material to improve the cycling performance of the cathode material and extend a cycling life of a lithium battery.
(2) In the cathode active material for the LIB of the present disclosure, different types of sulfur-containing compounds can be introduced to meet different requirements in aspects such as capacity, rate performance, and safety. The sulfate substances provided by the present disclosure exhibit universal applicability for improving the cycling performance of different types of lithium metallic compounds, and sulfates of different metals can be selected to meet various different performance requirements.
(3) In the present disclosure, cobalt hydroxide and a sulfate both are coated on a surface of a matrix of the cathode active material. The coated cobalt hydroxide can react with the residual lithium to produce an LCO structure, and the LCO structure can enhance the surface structural stability and improve the efficiency and rate performance, and can also cooperate with the sulfate substance for improving the cycling performance to enhance the electrochemical performance of the cathode active material.
(4) The preparation method of the cathode active material for the LIB in the present disclosure involves simple and easy steps, convenient operations, many types of available sulfates, and a low cost.

### BRIEF DESCRIPTION OF DRAWINGS

FIG. 1 is a scanning electron microscopy (SEM) image of the cathode active material prepared in Example 3.
FIG. 2 is an SEM image of the lithium metallic compound used in Comparative Example 1.
FIG. 3 is an SEM image of the cathode active material prepared in Comparative Example 2.
FIG. 4 shows the capacities of batteries fabricated from the cathode active materials prepared in examples and comparative examples.
FIG. 5 shows the cycling capacity retention at 25°C of batteries fabricated from the cathode active materials prepared in examples and comparative examples.
FIG. 6 shows the cycling capacity retention at 45°C of batteries fabricated from the cathode active materials prepared in examples and comparative examples.

### DETAILED DESCRIPTION OF THE EMBODIMENTS

In order to facilitate the understanding of the present disclosure, the present disclosure is described in detail below in conjunction with the accompanying drawings of the specification and the preferred examples, but the scope of the present disclosure is not limited to the following specific examples.

Unless otherwise defined, all technical terms used hereinafter have the same meaning as commonly understood by those skilled in the art. The technical terms used herein are merely for the purpose of describing specific examples, and are not intended to limit the scope of the present disclosure.

Unless otherwise specified, various raw materials, reagents, instruments, equipment, and the like used in the present disclosure can be purchased from the market or can be prepared by existing methods.

### Example 1: (useful to understand the claimed invention)

A cathode active material for an LIB was provided in the present disclosure, including a matrix Li_{1.01}Ni_{0.88}Co_{0.10}Al_{0.02}O₂ of the cathode active material and Li₂SO₄, where a mass of S in Li₂SO₄ was 0.09% of a total mass of the cathode active material, and Li₂SO₄ was mainly coated on a surface of the matrix of the cathode active material.

A preparation method of the cathode active material for the LIB in this example was provided, including the following steps:
(1) a lithium metallic compound with a molecular formula of Li_{1.01}Ni_{0.88}Co_{0.10}Al_{0.02}O₂ and a lithium sulfate powder were weighed and mixed according to a stoichiometric ratio, and then thoroughly stirred in a high-speed mechanical stirring device to obtain a mixture with an S content of 0.09%; and
(2) the mixture obtained in step (1) was calcined at a calcination temperature of 650°C in an oxygen atmosphere for 6 h to obtain a cathode active material including the lithium metallic compound and the sulfate.

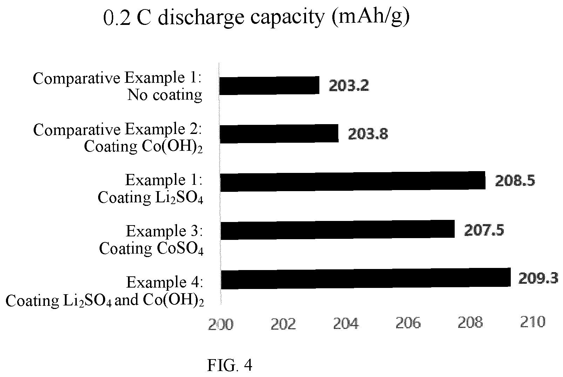

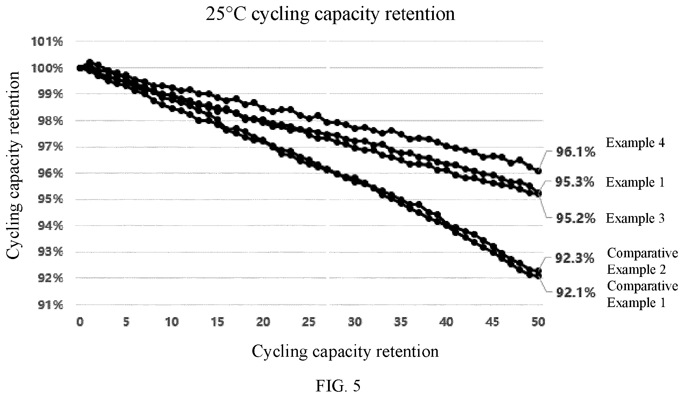

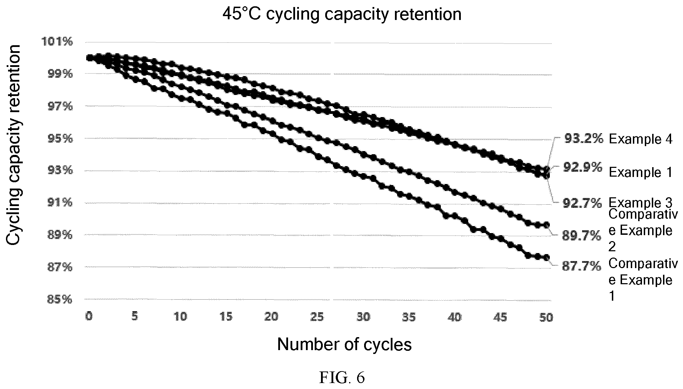

The cathode active material obtained in this example was used to fabricate a button battery with a lithium metal sheet as a negative electrode, and the button battery was tested. Test results were shown in FIG. 4 to FIG. 6. At 25°C, a specific discharge capacity after charge/discharge at 0.2 C in a voltage range of 3.0 V to 4.3 V was 208.5 mAh/g, and a capacity retention after 50 charge/discharge cycles at 1 C/1 C was 95.3%; and at 45°C, a capacity retention after 50 charge/discharge cycles at 0.5 C/0.5 C was 92.9%.

### Example 2: (useful to understand the claimed invention)

A cathode active material for an LIB was provided in the present disclosure, including a matrix Li_{1.03}Ni_{0.88}Co_{0.10}Al_{0.02}O₂ of the cathode active material and Al₂(SO₄)₃, where a mass of S in Al₂(SO₄)₃ was 0.12% of a total mass of the cathode active material, and Al₂(SO₄)₃ was mainly doped in the matrix of the cathode active material.

A preparation method of the cathode active material for the LIB in this example was provided, including the following steps:
(1) a nickel-cobalt-aluminum hydroxide precursor, lithium hydroxide, and aluminum sulfate were thoroughly mixed according to a stoichiometric ratio to obtain a mixture, where an amount of lithium hydroxide allowed a Li/Me (Me = Ni + Co + Al) molar ratio in the cathode active material to be 1.03, and an amount of aluminum sulfate allowed a mass of S to be 0.12% of a total mass of the cathode active material for the LIB; and
(2) the mixture obtained in step (1) was calcined at 750°C in an oxygen atmosphere for 15 h to obtain a cathode active material including the lithium metallic compound and the sulfate.

The aluminum sulfate-doped cathode active material was used to fabricate a button battery with a lithium metal sheet as a negative electrode, and the button battery was tested. At 25°C, a specific discharge capacity after charge/discharge at 0.2 C in a voltage range of 3.0 V to 4.3 V was 207.7 mAh/g, and a capacity retention after 50 charge/discharge cycles at 1 C/1 C was 94.9%; and at 45°C, a capacity retention after 50 charge/discharge cycles at 0.5 C/0.5 C was 92.4%.

### Example 3: (useful to understand the claimed invention)

A cathode active material for an LIB was provided in the present disclosure, including a matrix Li_{1.01}Ni_{0.88}Co_{0.10}Al_{0.02}O₂ of the cathode active material and CoSO₄, where a mass of S in CoSO₄ was 0.13% of a total mass of the cathode active material, and CoSO₄ was mainly coated on a surface of the matrix of the cathode active material.

A preparation method of the cathode active material for the LIB in this example was provided, including the following steps:
(1) a lithium metallic compound with a molecular formula of Li_{1.01}Ni_{0.88}Co_{0.10}Al_{0.02}O₂ and a cobalt sulfate powder were mixed and then thoroughly stirred in a high-speed mechanical stirring device to obtain a mixture, where an S content of the mixture is 0.13% and a Co content of added CoSO₄ is 0.24%; and
(2) the mixture obtained in step (1) was calcined at 650°C in an oxygen atmosphere for 6 h to obtain a cathode active material including the lithium metallic compound and the sulfate.

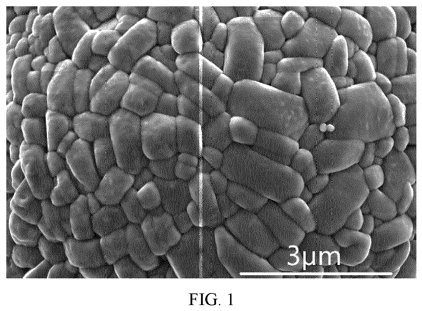

According to SEM analysis, as shown in FIG. 1, the primary particles on the surface of the cathode active material coated with cobalt sulfate have uneven surfaces. This indicates that the cobalt sulfate powder melts and enters the lithium metallic compound after high-temperature calcination.

The cathode active material obtained in this example was used to fabricate a button battery with a lithium metal sheet as a negative electrode, and the button battery was tested. Test results were shown in FIG. 4 to FIG. 6. At 25°C, a specific discharge capacity after charge/discharge at 0.2 C in a voltage range of 3.0 V to 4.3 V was 207.5 mAh/g, and a capacity retention after 50 charge/discharge cycles at 1 C/1 C was 95.2%; and at 45°C, a capacity retention after 50 charge/discharge cycles at 0.5 C/0.5 C was 92.7%.

### Example 4: (example in accordance with the claimed invention)

A cathode active material for an LIB was provided in the present disclosure, including a matrix Li_{1.01}Ni_{0.88}Co_{0.10}Al_{0.02}O₂ of the cathode active material, Li₂SO₄, and Co(OH)₂, where a mass of S in Li₂SO₄ was 0.09% of a total mass of the cathode active material, a content of coated cobalt was 0.24%, and Li₂SO₄ and Co(OH)₂ were co-coated on a surface of the matrix of the cathode active material.

A preparation method of the cathode active material for the LIB in this example was provided, including the following steps:
(1) a lithium metallic compound with a molecular formula of Li_{1.01}Ni_{0.88}Co_{0.10}Al_{0.02}O₂, lithium sulfate, and a cobalt hydroxide powder were mixed according to a specified mass ratio and then thoroughly stirred in a high-speed mechanical stirring device to obtain a mixture, where an amount of lithium sulfate allowed a mass of S to be 0.09% of a total mass of the cathode active material, and cobalt hydroxide was added at an amount allowing the same Co content as the Co content provided by the addition of cobalt sulfate in Example 3, which both were 0.24%; and
(2) the mixture obtained in step (1) was calcined at 650°C in an oxygen atmosphere for 6 h to obtain a cathode active material including the lithium metallic compound and the sulfate.

The cathode active material co-coated with lithium sulfate and cobalt hydroxide was used to fabricate a button battery with a lithium metal sheet as a negative electrode, and the button battery was tested. Test results were shown in FIG. 4 to FIG. 6. At 25°C, a specific discharge capacity after charge/discharge at 0.2 C in a voltage range of 3.0 V to 4.3 V was 209.3 mAh/g, and a capacity retention after 50 charge/discharge cycles at 1 C/1 C was 96.1%; and at 45°C, a capacity retention after 50 charge/discharge cycles at 0.5 C/0.5 C was 93.2%.

### Example 5: (useful to understand the claimed invention)

A cathode active material for an LIB was provided in the present disclosure, including a matrix Li_{1.01}Ni_{0.88}Co_{0.10}Al_{0.02}O₂ of the cathode active material and CoSO₄, where a mass of S in CoSO₄ was 0.06% of a total mass of the cathode active material, and CoSO₄ was mainly coated on a surface of the matrix of the cathode active material.

A preparation method of the cathode active material for the LIB in this example was provided, including the following steps:
(1) a lithium metallic compound with a molecular formula of Li_{1.01}Ni_{0.88}Co_{0.10}Al_{0.02}O₂ and a cobalt sulfate powder were mixed and then thoroughly stirred in a high-speed mechanical stirring device to obtain a mixture with an S content of 0.06%; and
(2) the mixture obtained in step (1) was calcined at 650°C in an oxygen atmosphere for 6 h to obtain a cathode active material including the lithium metallic compound and the sulfate.

The cathode active material obtained in this example was used to fabricate a button battery with a lithium metal sheet as a negative electrode, and the button battery was tested. At 25°C, a specific discharge capacity after charge/discharge at 0.2 C in a voltage range of 3.0 V to 4.3 V was 207.8 mAh/g, and a capacity retention after 50 charge/discharge cycles at 1 C/1 C was 94.5%; and at 45°C, a capacity retention after 50 charge/discharge cycles at 0.5 C/0.5 C was 92.1%.

### Example 6: (useful to understand the claimed invention)

A cathode active material for an LIB was provided in the present disclosure, including a matrix Li_{1.01}Ni_{0.88}Co_{0.10}Al_{0.02}O₂ of the cathode active material and CoSO₄, where a mass of S in CoSO₄ was 0.40% of a total mass of the cathode active material, and CoSO₄ was mainly coated on a surface of the matrix of the cathode active material.

A preparation method of the cathode active material for the LIB in this example was provided, including the following steps:
(1) a lithium metallic compound with a molecular formula of Li_{1.01}Ni_{0.88}Co_{0.10}Al_{0.02}O₂ and a cobalt sulfate powder were mixed and then thoroughly stirred in a high-speed mechanical stirring device to obtain a mixture with an S content of 0.40%; and
(2) the mixture obtained in step (1) was calcined at 650°C in an oxygen atmosphere for 6 h to obtain a cathode active material including the lithium metallic compound and the sulfate.

The cathode active material obtained in this example was used to fabricate a button battery with a lithium metal sheet as a negative electrode, and the button battery was tested. At 25°C, a specific discharge capacity after charge/discharge at 0.2 C in a voltage range of 3.0 V to 4.3 V was 206.2 mAh/g, and a capacity retention after 50 charge/discharge cycles at 1 C/1 C was 95.2%; and at 45°C, a capacity retention after 50 charge/discharge cycles at 0.5 C/0.5 C was 92.8%.

### Comparative Example 1:

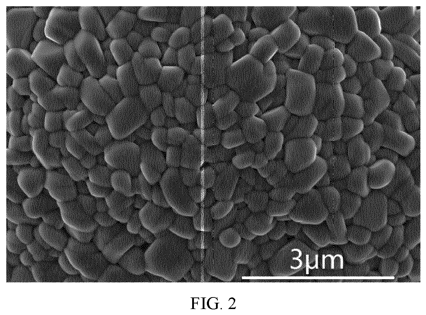

An S content in the lithium metallic compound with a molecular formula of Li_{1.01}Ni_{0.88}Co_{0.10}Al_{0.02}O₂ in Example 1 was tested to be about 0.02%, and this S content was mainly caused by the introduction of a sulfate impurity in the precursor raw material for synthesizing the cathode material. The cathode material was subjected to SEM analysis. As shown in FIG. 2, the cathode material has a smooth surface.

The uncoated cathode material matrix (the lithium metallic compound with a molecular formula of Li_{1.01}Ni_{0.88}Co_{0.10}Al_{0.02}O₂) was used to fabricate a button battery with a lithium metal sheet as a negative electrode, and the button battery was tested. Test results were shown in FIG. 4 to FIG. 6. At 25°C, a specific discharge capacity after charge/discharge at 0.2 C in a voltage range of 3.0 Vto 4.3 V was 203.2 mAh/g, and a capacity retention after 50 charge/discharge cycles at 1 C/1 C was 92.1%; and at 45°C, a capacity retention after 50 charge/discharge cycles at 0.5 C/0.5 C was 87.7%.

It can be known from the comparison with the lithium sulfate-coated cathode material in Example 1 and the cobalt sulfate-coated cathode material in Example 3 that the introduction of the sulfate greatly improves the cycling performance of the material.

### Comparative Example 2:

The same lithium metallic compound Li_{1.01}Ni_{0.88}Co_{0.10}Al_{0.02}O₂ as Example 1 was taken and coated with cobalt hydroxide, where a cobalt content was the same as the cobalt content in Example 3.

A preparation method of the cathode active material in this comparative example was provided, including the following steps:
(1) a lithium metallic compound with a molecular formula of Li_{1.01}Ni_{0.88}Co_{0.10}Al_{0.02}O₂ and a cobalt hydroxide powder were mixed according to a specified mass ratio and then thoroughly stirred in a high-speed mechanical stirring device to obtain a mixture, where cobalt hydroxide was added at an amount allowing the same Co content as the Co content provided by the addition of cobalt sulfate in Example 3, which both were 0.24%; and
(2) the mixture obtained in step (1) was calcined at 650°C in an oxygen atmosphere for 6 h to obtain a cobalt hydroxide-coated cathode active material.

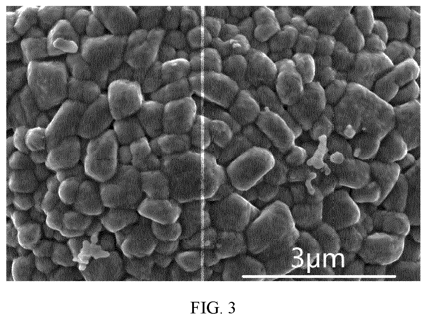

The cathode active material was subjected to SEM analysis. As shown in FIG. 3, a primary particle of the coated cathode material also has an uneven surface. An S content in the cathode active material was tested to be about 0.02%, and this S content was caused by the introduction of a sulfate impurity in the precursor raw material for synthesizing the cathode material.

The cobalt hydroxide-coated cathode active material was used to fabricate a button battery with a lithium metal sheet as a negative electrode, and the button battery was tested. Test results were shown in FIG. 4 to FIG. 6. At 25°C, a specific discharge capacity after charge/discharge at 0.2 C in a voltage range of 3.0 V to 4.3 V was 203.8 mAh/g, and a capacity retention after 50 charge/discharge cycles at 1 C/1 C was 92.3%; and at 45°C, a capacity retention after 50 charge/discharge cycles at 0.5 C/0.5 C was 89.7%.

### Comparative Example 3:

A cathode active material for an LIB was provided in this comparative example, including a matrix Li_{1.01}Ni_{0.88}Co_{0.10}Al_{0.02}O₂ of the cathode active material and CoSO₄, where a mass of S in CoSO₄ was 0.50% of a total mass of the cathode active material, and CoSO₄ was mainly coated on a surface of the matrix of the cathode active material.

A preparation method of the cathode active material for the LIB in this comparative example was provided, including the following steps:
(1) a lithium metallic compound with a molecular formula of Li_{1.01}Ni_{0.88}Co_{0.10}Al_{0.02}O₂ and a cobalt sulfate powder were mixed and then thoroughly stirred in a high-speed mechanical stirring device to obtain a mixture with an S content of 0.50%; and
(2) the mixture obtained in step (1) was calcined at 650°C in an oxygen atmosphere for 6 h to obtain a cathode active material including the lithium metallic compound and the sulfate.

The cathode active material was used to fabricate a button battery with a lithium metal sheet as a negative electrode, and the button battery was tested. At 25°C, a specific discharge capacity after charge/discharge at 0.2 C in a voltage range of 3.0 V to 4.3 V was 203.4 mAh/g, and a capacity retention after 50 charge/discharge cycles at 1 C/1 C was 95.0%; and at 45°C, a capacity retention after 50 charge/discharge cycles at 0.5 C/0.5 C was 92.9%.

Table 1 shows the electrical performance results of the cathode active materials obtained in examples and comparative examples.

**Table 1 Electrical performance results of the cathode active materials obtained in examples and comparative examples.**

| Example | Matrix type | Coated or doped substance | S content | Capacity at 0.2 C | Capacity retention after 50 cycles at 25°C | Capacity retention after 50 cycles at 45°C |
|---|---|---|---|---|---|---|
| Example 1 | Li_{1.01}Ni_{0.88}Co_{0.10}Al_{0.02}O₂ | Coated Li₂SO₄ | 0.09% | 208.5 | 95.3% | 92.9% |
| Example 2 | Li_{1.03}Ni_{0.88}Co_{0.10}Al_{0.02}O₂ | Doped Al₂(SO₄)₃ | 0.12% | 207.7 | 94.9% | 92.4% |
| Example 3 | Li_{1.01}Ni_{0.88}Co_{0.10}Al_{0.02}O₂ | Coated CoSO₄ | 0.13% | 207.5 | 95.2% | 92.7% |
| Example 4 | Li_{1.01}Ni_{0.88}Co_{0.10}Al_{0.02}O₂ | Co-coated Li₂SO₄ and Co(OH)₂ | 0.09% | 209.3 | 96.1% | 93.2% |
| Example 5 | Li_{1.01}Ni_{0.88}Co_{0.10}Al_{0.02}O₂ | Coated CoSO₄ | 0.06% | 207.8 | 94.5% | 92.1% |
| Example 6 | Li_{1.01}Ni_{0.88}Co_{0.10}Al_{0.02}O₂ | Coated CoSO₄ | 0.40% | 206.2 | 95.2% | 92.8% |
| Comparative Example 1 | Li_{1.01}Ni_{0.88}Co_{0.10}Al_{0.02}O₂ | Doped sulfate (introduction of a precursor raw material) | 0.02% | 203.2 | 92.1% | 87.7% |
| Comparative Example 2 | Li_{1.01}Ni_{0.88}Co_{0.10}Al_{0.02}O₂ | Coated Co(OH)₂ | 0.02% | 203.8 | 92.3% | 89.7% |
| Comparative Example 3 | Li_{1.01}Ni_{0.88}Co_{0.10}Al_{0.02}O₂ | Coated CoSO₄ | 0.50% | 203.4 | 95.0% | 92.9% |

It can be known from the comparison between Example 3 and Comparative Example 2 that, although Co is introduced in both of the coatings in the example and the comparative example, the addition of the sulfate in the example can lead to greater improvement for the cycling performance than the coated cobalt hydroxide. It can be known from the comparison among Example 1, Example 4, and Comparative Example 2 that the co-coating of lithium sulfate and cobalt hydroxide can significantly increase the capacity of the material while improving the cycling performance of the material.

## Claims

1. A cathode active material for a lithium-ion battery (LIB), comprising a matrix of the cathode active material for the LIB, cobalt hydroxide and a sulfur-containing compound, wherein
a mass of S in the sulfur-containing compound is 0.06% to 0.40% of a total mass of the cathode active material for the LIB; and the sulfur-containing compound is mainly coated on a surface of the matrix of the cathode active material in the form of a sulfate;
the surface of the matrix of the cathode active material is further coated with the cobalt hydroxide, and a coating amount of the cobalt hydroxide is calculated based on cobalt, and a mass of the cobalt is 0.1% to 1.5% of the total mass of the cathode active material for the LIB.

2. The cathode active material for the LIB according to claim 1, wherein the mass of S in the sulfur-containing compound is 0.06% to 0.13% of the total mass of the cathode active material for the LIB.

3. The cathode active material for the LIB according to claim 1, wherein the sulfur-containing compound comprises one or more selected from the group consisting of lithium sulfate, cobalt sulfate, manganese sulfate, aluminum sulfate, magnesium sulfate, titanium sulfate, zirconium sulfate, sodium sulfate, sodium metabisulfite, and ammonium sulfate.

4. The cathode active material for the LIB according to any one of claims 1 to 3, wherein the matrix of the cathode active material has a chemical formula of LiₓNi_{y}M_{(1-y)}O₂, wherein M is one or more selected from the group consisting of Co, Mn, Al, Mg, Ti, and Zr, 0.95 ≤ x ≤ 1.05, and 0.50 ≤ y ≤ 1.

5. A preparation method of the cathode active material for the LIB according to any one of claims 1 to 4, comprising the following steps: mixing the matrix of the cathode active material, the cobalt hydroxide and the sulfur-containing compound according to a stoichiometric ratio, and subjecting a resulting mixture to calcination to obtain the cathode active material for the LIB, wherein the calcination is conducted at 300°C to 750°C for 3 h to 15 h.

## Patentansprüche

1. Kathodenaktivmaterial für eine Lithium-Ionen-Batterie (LIB), umfassend eine Matrix des Kathodenaktivmaterials für die LIB, Kobalthydroxid und eine schwefelhaltige Verbindung, wobei
die Masse von S in der schwefelhaltigen Verbindung 0,06 % bis 0,40 % der Gesamtmasse des Kathodenaktivmaterials für die LIB beträgt; und die schwefelhaltige Verbindung überwiegend in Form eines Sulfats auf einer Oberfläche der Matrix des Kathodenaktivmaterials beschichtet ist;
die Oberfläche der Matrix des Kathodenaktivmaterials ferner mit dem Kobalthydroxid beschichtet ist, und eine Beschichtungsmenge des Kobalthydroxids auf der Basis von Kobalt berechnet wird, und eine Masse des Kobalts 0,1 % bis 1,5 % der Gesamtmasse des Kathodenaktivmaterials für die LIB beträgt.

2. Kathodenaktivmaterial für die LIB nach Anspruch 1, wobei die Masse von S in der schwefelhaltigen Verbindung 0,06 % bis 0,13 % der Gesamtmasse des Kathodenaktivmaterials für die LIB beträgt.

3. Kathodenaktivmaterial für die LIB nach Anspruch 1, wobei die schwefelhaltige Verbindung eine oder mehrere Verbindungen umfasst, ausgewählt aus der Gruppe bestehend aus Lithium-sulfat, Kobalt-sulfat, Mangan-sulfat, Aluminium-sulfat, Magnesium-sulfat, Titan-sulfat, Zirkonium-sulfat, Natrium-sulfat, Natrium-metabisulfit und Ammonium-sulfat.

4. Kathodenaktivmaterial für die LIB nach einem der Ansprüche 1 bis 3, wobei die Matrix des Kathodenaktivmaterials die chemische Formel LiₓNi_{y}M_{(1-y)}O₂ aufweist, wobei M eine oder mehrere Komponenten umfasst, ausgewählt aus der Gruppe bestehend aus Co, Mn, Al, Mg, Ti und Zr, 0,95 ≤ x ≤ 1,05 und 0,50 ≤ y ≤ 1.

5. Herstellungsverfahren des Kathodenaktivmaterials für die LIB nach einem der Ansprüche 1 bis 4, umfassend die folgenden Schritte: Mischen der Matrix des Kathodenaktivmaterials, des Kobalthydroxids und der schwefelhaltigen Verbindung entsprechend einem stöchiometrischen Verhältnis und Unterziehen des resultierenden Gemischs einer Kalzinierung, um das Kathodenaktivmaterial für die LIB zu erhalten, wobei die Kalzinierung bei 300 °C bis 750 °C für 3 h bis 15 h ausgeführt wird.

## Revendications

1. Matériau actif de cathode pour une batterie au lithium-ion (LIB), comprenant une matrice du matériau actif de cathode pour la batterie au lithium-ion LIB, de l'hydroxyde de cobalt et un composé contenant du soufre, dans lequel
une masse de S dans le composé contenant du soufre est de 0,06% à 0,40% par rapport à une masse totale du matériau actif de cathode pour la batterie au lithium-ion LIB ; et le composé contenant du soufre est principalement revêtu sur une surface de la matrice du matériau actif de cathode sous la forme d'un sulfate ;
la surface de la matrice du matériau actif de cathode est également recouverte d'hydroxyde de cobalt, et la quantité de revêtement d'hydroxyde de cobalt est calculée en fonction du cobalt, la masse de cobalt représentant de 0,1% à 1,5% de la masse totale du matériau actif de cathode pour la batterie au lithium-ion LIB.

2. Matériau actif de cathode pour la batterie au lithium-ion LIB selon la revendication 1, dans lequel la masse de S dans le composé contenant du soufre est de 0,06% à 0,13% par rapport à la masse totale du matériau actif de cathode pour la batterie au lithium-ion LIB.

3. Matériau actif de cathode pour la batterie au lithium-ion LIB selon la revendication 1, dans lequel le composé contenant du soufre comprend un ou plusieurs élément(s) choisi(s) dans le groupe constitué par le sulfate de lithium, le sulfate de cobalt, le sulfate de manganèse, le sulfate d'aluminium, le sulfate de magnésium, le sulfate de titane, le sulfate de zirconium, le sulfate de sodium, le métabisulfite de sodium et le sulfate d'ammonium.

4. Matériau actif de cathode pour la batterie au lithium-ion LIB selon l'une quelconque des revendications 1 à 3, dans lequel la matrice du matériau actif de cathode a une formule chimique LiₓNi_{y}M_{(1-y)}O₂, dans laquelle M est un ou plusieurs élément(s) choisi(s) dans le groupe constitué par Co, Mn, Al, Mg, Ti et Zr, 0,95 ≤ x ≤ 1,05, et 0,50 ≤ y ≤ 1.

5. Procédé de préparation du matériau actif de cathode pour la batterie au lithium-ion LIB selon l'une quelconque des revendications 1 à 4, comprenant les étapes suivantes : le mélange de la matrice du matériau actif de cathode, de l'hydroxyde de cobalt et du composé contenant du soufre selon un rapport stœchiométrique, et la soumission d'un mélange résultant à une calcination pour obtenir le matériau actif de cathode pour la batterie au lithium-ion LIB, dans lequel la calcination est conduite à 300°C à 750°C pendant 3 h à 15 h.
